# EUROPÄISCHE PATENTSCHRIFT

(11) **EP 1 897 342 B1**
(45) Veröffentlichungstag und Bekanntmachung des Hinweises auf die Patenterteilung: **08.08.2018**
(21) Anmeldenummer: 06763879.1
(22) Anmeldetag: 26.06.2006
(51) Int. Cl.: H04L 29/14, H04L 29/08, B64D 11/00

(54) **FEHLERTOLERANTES DATENÜBERTRAGUNGSSYSTEM IN EINEM PASSAGIERFLUGZEUG**
FAULT-TOLERANT SYSTEM FOR DATA TRANSMISSION IN A PASSENGER AIRCRAFT
SYSTÈME DE TRANSMISSION DE DONNÉES TOLÉRANT AUX ERREURS DANS UN AVION DE PASSAGERS

(30) Priorität: 27.06.2005 DE 102005030073
(43) Veröffentlichungstag der Anmeldung: 12.03.2008
(73) Patentinhaber: Airbus Operations GmbH, 21129 Hamburg (DE)
(72) Erfinder: WESTEROTH, Roman, 22869 Schenefeld (DE)
(74) Vertreter: Bird & Bird LLP
(86) Internationale Anmeldenummer: PCT/EP2006/063539
(87) Internationale Veröffentlichungsnummer: WO 2007/000431

(56) Entgegenhaltungen:
- GARDNER R D ET AL: "PHONAV-a photonic WDM network architecture for next generation avionics systems" AEROSPACE CONFERENCE, 1999. PROCEEDINGS. 1999 IEEE SNOWMASS AT ASPEN, CO, USA 6-13 MARCH 1999, PISCATAWAY, NJ, USA,IEEE, US, Bd. 2, 6. März 1999 (1999-03-06), Seiten 451-466, XP010350335 ISBN: 0-7803-5425-7
- ANDERSON D E ET AL: "777 optical LAN technology review" ELECTRONIC COMPONENTS & TECHNOLOGY CONFERENCE, 1998. 48TH IEEE SEATTLE, WA, USA 25-28 MAY 1998, NEW YORK, NY, USA,IEEE, US, 25. Mai 1998 (1998-05-25), Seiten 386-390, XP010283898 ISBN: 0-7803-4526-6
- JOHANSSON B S ET AL: "FLEXIBLE BUS : A SELF-RESTORING OPTICAL ADM RING ARCHITECTURE" ELECTRONICS LETTERS, IEE STEVENAGE, GB, Bd. 32, Nr. 25, 5. Dezember 1996 (1996-12-05), Seiten 2338-2339, XP000685328 ISSN: 0013-5194
- COHN M D ED - INSTITUTE OF ELECTRICAL AND ELECTRONICS ENGINEERS: "A PROPOSED LOCAL AREA NETWORK FOR NEXT-GENERATION AVIONIC SYSTEMS" PROCEEDINGS OF THE NATIONAL AEROSPACE AND ELECTRONICS CONFERENCE. (NAECON). DAYTON, MAY 23 - 27, 1988, NEW YORK, IEEE, US, Bd. VOL. 1 CONF. 40, Mai 1988 (1988-05), Seiten 90-98, XP000812492
- GASKA T D: "COTS fibre channel network technology insertion into avionics systems" AEROSPACE AND ELECTRONICS CONFERENCE, 1998. NAECON 1998. PROCEEDINGS OF THE IEEE 1998 NATIONAL DAYTON, OH, USA 13-17 JULY 1998, NEW YORK, NY, USA,IEEE, US, 13. Juli 1998 (1998-07-13), Seiten 120-127, XP010298905 ISBN: 0-7803-4449-9
- HUDGINS C E ET AL: "Applying commercial real-time data networks to future military avionics" MICROPROCESSORS AND MICROSYSTEMS, IPC BUSINESS PRESS LTD. LONDON, GB, Bd. 21, Nr. 1, Juli 1997 (1997-07), Seiten 21-28, XP004093362 ISSN: 0141-9331
- YOO D ET AL: "Multistage ring network: An interconnection network for large scale shared memory multiprocessors" JOURNAL OF SYSTEMS ARCHITECTURE, ELSEVIER SCIENCE PUBLISHERS BV., AMSTERDAM, NL, Bd. 46, Nr. 9, Juli 2000 (2000-07), Seiten 765-778, XP004205068 ISSN: 1383-7621

## Beschreibung

Die Erfindung bezieht sich allgemein auf ein Kommunikationssystem in einem Passagierflugzeug und insbesondere auf ein fehlertolerantes Übertragungssystem zum Übertragen von Daten von wenigstens einer Datenquelle an mehrere Endgeräte in dem Flugzeug nach dem Oberbegriff von Anspruch 1.

Bisher wird bei Unterhaltungs- (in flight entertainment, IFE) Systemen an Bord von Großflugzeugen die Zentralelektronik für die Versorgung der Passagiere mit Unterhaltungsprogrammen etc. an einem Ort zusammengefasst. Diese Zentralelektronik umfasst wenigstens einen Rechner, Modulatoren, digitale Medien für die Speicherung und verschiedene Abspieleinheiten wie Audiogeräte, DVD-Spieler etc. sowie die Stromversorgung und Schnittstelleneinrichtungen. Die einzelnen Unterhaltungssysteme an den Sitzen der Passagiere werden zentral über eine Steuerkonsole von der Flugbegleitermannschaft gesteuert.

Die einzelnen Sitzplätze in dem Flugzeug verfügen über Wiedergabegeräte für die Daten von der Zentralelektronik wie z.B. Audiosysteme und Bildschirme, so dass der Flugpassagier während des Fluges aus einem breiten Spektrum an Unterhaltungsprogrammen wählen kann. Versorgt werden diese Sitzplatzeinheiten über ein Bordnetzwerk. Das Bordnetzwerk wird von der Zentralelektronik gespeist und umfasst mehrere Verteiler, die gegebenenfalls einzelnen Flugzeuguntereinheiten zugeordnet sind. So kann in Flugzeugen mit mehreren Ebenen ein Verteiler pro Deck vorgesehen werden. Auf einer Ebene des Flugzeugs werden bei mehreren hintereinander angeordneten Sitzreihen alle Sitze, die sich unmittelbar hintereinander befinden, von einem Verteiler versorgt.

Bei dieser Verteilerstruktur wird von dem Verteiler ein erstes Endgerät versorgt, und ausgehend von dem ersten Endgerät wird ein zweites Endgerät versorgt, ausgehend von dem zweiten Endgerät wird ein drittes Endgerät versorgt usw., so dass sich eine Kette von hintereinander geschalteten Endgeräten (daisy chain) ergibt, die alle mit Daten von dem zentralen Unterhaltungssystem im Flugzeug versorgt werden. Wenn jedoch die Verbindung zwischen zwei Endgeräten in dieser Kette unterbrochen wird, so werden zwangsläufig die dahinter liegenden Endgeräte ebenfalls von der Versorgung abgeschnitten.

Es ist die Aufgabe der vorliegenden Erfindung, ein fehlertolerantes Übertragungssystem zu schaffen, das auch bei Ausfall einzelner Endgeräte und Komponenten die Versorgung der restlichen Endgeräte und Komponenten sicherstellt.

Diese Aufgabe wird durch das Kommunikationssystem nach Anspruch 1 gelöst. Bevorzugte Ausführungsformen der Erfindung sind Gegenstand der Unteransprüche.

Der Erfindung liegt der Gedanke zugrunde, die Übertragungswege in der Endgerätekette redundant auszulegen. Im einzelnen bedeutet dies, wenigstens einen Nebenschluss zwischen dem ersten und dem letzten Endgerät in der Endgerätekette vorzusehen, über den diese beiden Endgeräte miteinander verbunden sind. Sollte dann die Endgerätekette zwischen dem ersten und dem letzten Endgerät unterbrochen wird, so können die beiden Halbketten zwischen dem ersten und dem ausgefallenen Endgerät bzw. zwischen dem letzten und dem ausgefallenen Endgerät von ihrem jeweiligen Ende her, d.h. vom ersten bzw. vom letzten Endgerät her versorgt werden. Wenn dagegen alle Endgeräte in der Endgerätekette ordnungsgemäß funktionieren, werden keine Daten über die Nebenschlussverbindung übertragen.

Das erfindungsgemäße Übertragungssystem zum Übertragen von Kommunikationsdaten von wenigstens einer Datenquelle an mehrere Endgeräte in einem Passagierflugzeug über einen Verteiler, der mit der Datenquelle verbunden ist, wobei die Endgeräte über jeweils einen Eingangsport und einen Ausgangsport zu einer Endgerätekette hintereinander geschaltet sind, ist dadurch gekennzeichnet, dass das erste und das letzte Endgerät in der Kette mit einer Nebenschlussverbindung direkt miteinander verbunden sind, so dass die Kommunikationsdaten zwischen dem ersten Endgerät und dem letzten Endgerät in der Endgerätekette von Endgerät zu Endgerät in der Kette übertragen werden, wenn alle Endgeräte miteinander verbunden sind, und die Kommunikationsdaten von dem ersten Endgerät in der Endgerätekette bis zu dem inaktiven Endgerät und von dem letzten Endgerät in der Endgerätekette bis zu dem inaktiven Endgerät übertragen werden, wenn die Verbindung zwischen den Endgeräten in der Endgerätekette unterbrochen ist.

Vorzugsweise umfasst jedes Endgerät und/oder jeder Verteiler einen Bypass-Schalter, durch den bei Ausfall des Endgerätes der Eingangsport mit dem Ausgangsport verbunden wird.

In einer weiteren bevorzugten Ausführungsform der Erfindung weist der Verteiler einen bidirektionalen Port auf, über den der Verteiler mit dem entsprechenden bidirektionalen Port des Verteilers einer benachbarten Endgerätekette verbunden ist.

Ein Vorteil der erfindungsgemäßen Lösung der Aufgabe besteht darin, dass sie einfach zu implementieren ist und die Ausfallwahrscheinlichkeit von mehreren Endgeräten deutlich verringert wird.

Weitere Merkmale und Vorteile der Erfindung ergeben sich aus der folgenden Beschreibung von Ausführungsbeispielen, wobei auf die beigefügte Zeichnung Bezug genommen wird.

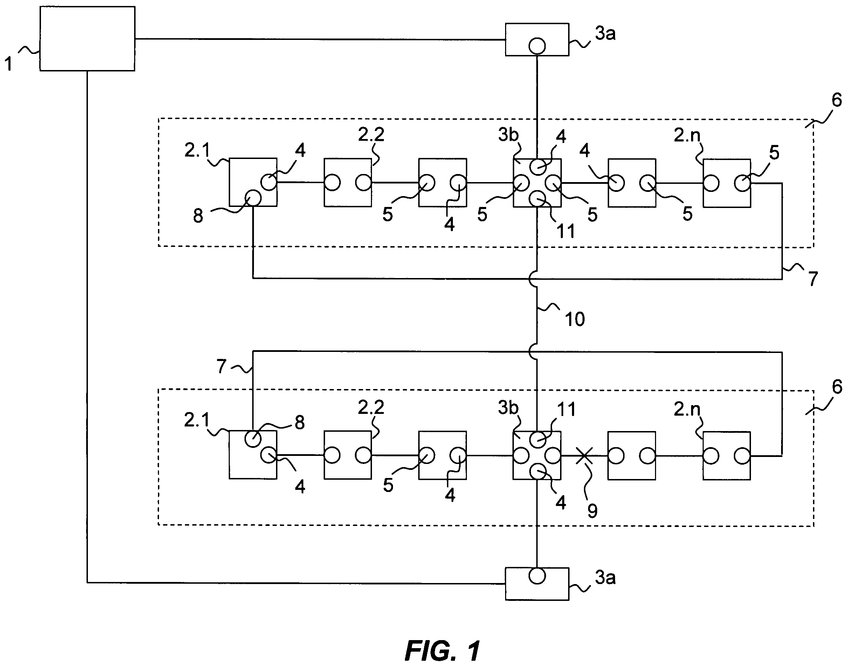

Fig. 1 zeigt schematisch eine erste Ausführungsform des erfindungsgemäßen Übertragungssystems.

In Fig. 1 ist ein Übertragungssystem für die Übertragung von Daten für wenigstens ein Unterhaltungsprogramm gezeigt, das eine Datenquelle 1 umfasst, in der vorab aufgezeichnete Unterhaltungsprogramme abgespeichert sind. Über Bereichsverteiler 3a, die sich an zentralen Punkten im (nicht dargestellten) Flugzeug befinden, werden diese Daten an mehrere Endgeräte 2.1, 2.2, ..., 2.n in dem Passagierflugzeug übertragen. Die Übertragung erfolgt derart, dass die Daten von der Datenquelle 1, z.B. einem lokalen Server, in einem Bereichsverteiler 3a eingespeist werden. Von dem Bereichsverteiler 3a werden die Daten an den Flächenverteiler 3b übermittelt, und von dem Flächenverteiler 3b werden die Daten über einen Datenbus an die auf beiden Seiten des Flächenverteilers 3b angeordneten Endgeräte weitergeleitet. Von dem jeweils benachbarten Endgerät werden die Daten für die Wiedergabe verwendet und/oder an das in der Kette der Endgeräte folgende Gerät weitergeleitet.

Im einzelnen bedeutet dies, dass wenn der Passagier an einem der Endgeräte, z.B. dem Endgerät 2.2 Musik hören möchte, die entsprechenden Musikdaten auf dem Datenbus in dem Endgerät gelesen und in einer (nicht dargestellten) Audioeinheit in dem Endgerät 2.2 weiterverarbeitet werden. Außerdem werden die Daten von dem Endgerät 2.2 unverändert wieder ausgegeben und an das folgende Endgerät 2.1 weitergeleitet. Die auf dem Datenbus ebenfalls anliegenden Videodaten werden beispielsweise direkt an das folgende Endgerät weitergeleitet. In dem nachgeschalteten Endgerät 2.1 werden dagegen beispielsweise die Videodaten mit Informationen über das Wetter am Zielort des Flugzeugs gelesen, weiterverarbeitet und für den Passagier dargestellt. Die Daten werden von dem Endgerät an die folgenden Endgeräte weitergeleitet, usw. Dazu umfassen die Endgeräte jeweils einen Eingangsport 4, über den sie mit dem vorangehenden Endgerät verbunden sind, und einen Ausgangsport 5, über den sie mit dem nachfolgenden Endgerät verbunden sind. Insgesamt ergibt sich so eine Kette 6 von Endgeräten, die hintereinander geschaltet sind.

In Fig. 1 ist unter der ersten Kette 6, die mit dem ersten Bereichsverteiler 3a verbunden ist, eine weitere Kette 6 gezeigt, die an einem zweiten Bereichsverteiler 3a angeschlossen ist, wobei der zweite Bereichsverteiler 3a ebenfalls direkt mit der Datenquelle 1 verbunden ist. Die Topologie der zweiten Kette 6 ist grundsätzlich die gleiche wie in der ersten Kette 6.

In der zweiten Kette in Fig. 1 unten ist eine Unterbrechung 9 zwischen zwei Geräten aufgetreten. Die Unterbrechung ist durch zwei diagonale Linien angedeutet. Bei der Hierarchie der Datenübertragung, wie sie oben beschrieben wurde, bedeutet das, dass alle Endgeräte 2, die in der Kette 6 vom Flächenverteiler 3b gesehen hinter der Unterbrechung 9 liegen, nicht mehr versorgt werden können. Erfindungsgemäß wird daher das Endgerät 2.n am Ende der Kette 6 über eine Nebenschlussverbindung 7 direkt mit dem ersten Endgerät 2.1 verbunden, das dazu neben dem ersten Eingangsport 4 einen zweiten Eingangsport 8 aufweist.

Mit der Nebenschlussverbindung 7 werden die Daten von dem ersten Endgerät 2.1 über seinen zweiten Ausgangsport 8 in der Endgerätekette 6 direkt an das letzte Endgerät 2.n in der Endgerätekette 6 übertragen. Gleichzeitig werden die Daten wie bisher von dem ersten Endgerät 2.1 über seinen ersten Ausgangsport 5 an das zweite Endgerät 2.2 übertragen, von dem zweiten Endgerät 2.2 über dessen Ausgangsport 5 an das dritte Endgerät 2.3 etc. bis zu der Unterbrechung 9 in der Endgerätekette 6. Die Endgeräte 2, die hinter der Unterbrechung 9 liegen, werden nun ausgehend von dem letzten Endgerät 2.n versorgt, indem dieses die Daten, die es nun über seinen Ausgangsport 5 erhält, über seinen Eingangsport 4 an das Endgerät 2.n-1 weiterleitet, dieses Endgerät 2.n-1 die Daten an das Endgerät 2.n-2 weiterleitet usw., bis zu der Unterbrechung 9 in der Endgerätekette.

Wie der Fachmann erkennt, werden die Begriffe "Eingangsport" und "Ausgangsport" hier nur zur Angabe einer Richtung verwendet, wobei der Eingangsport im Normalfall im Endgerät stromaufwärts liegt und der Ausgangsport im Normalfall im Endgerät stromabwärts liegt. Im Falle eines Ausfalls eines Endgerätes kann sich diese Reihenfolge aber umkehren. Ein Port wird hier also als bidirektionaler Port verstanden.

Durch die Nebenschlussverbindung wird somit sichergestellt, dass bei Unterbrechung des Busses bei 9 trotzdem alle Endgeräte 2.1, 2.2, ..., 2.n weiterhin mit Daten versorgt werden.

Es versteht sich jedoch von selbst, dass dagegen die Daten zwischen dem ersten Endgerät 2.1 und dem letzten Endgerät 2.n in der Endgerätekette 6 von Endgerät zu Endgerät in der Kette übertragen werden, wenn alle Endgeräte miteinander verbunden sind. D.h. in diesem Fall ist die Nebenschlussverbindung 7 redundant und wird nicht genutzt.

In einer bevorzugten Ausführungsform der Erfindung umfasst jedes Endgerät 2.1, ..., 2.n einen Bypass-Schalter, durch den bei Ausfall des Endgerätes der Eingangsport 4 mit dem Ausgangsport 5 verbunden wird. Insbesondere umfasst auch der Flächenverteiler 3b einen solchen Bypass-Schalter, so dass bei Ausfall des Flächenverteilers 3b der oder die Eingangsports 4 mit den Ausgangsports 5 kurzgeschlossen werden.

Um auch bei Ausfall eines der beiden Bereichsverteiler 3a die Versorgung der Endgeräteketten 6 aufrechtzuerhalten, wird in einer bevorzugten Ausführungsform der Erfindung außerdem eine Verteilerverbindung 10 zwischen den beiden Flächenverteilern 3b vorgesehen. Die Verteiler 3b umfassen dazu einen bidirektionalen Verbindungsport 11. Über den Verbindungsport 11 können Daten ausgegeben und eingelesen werden. Wenn also der Flächenverteiler 3b einer Kette 6 ausgefallen ist, so werden von dem Flächenverteiler 3b der benachbarten Kette 6 über dessen Verbindungsport 11 die von dem Bereichsverteiler 3a empfangenen Daten ausgegeben. Diese Daten werden dann in dem ausgefallenen Flächenverteiler 3b direkt von dem Verbindungsport 11 an die Ausgangsports 5 weitergeleitet, so dass auch die Versorgung der Kette mit dem ausgefallenen Flächenverteiler 3b weiterhin gewährleistet bleibt.

### Bezugszeichen

- 1: Datenquelle
- 2: Endgeräte 2.1, 2.2, ..., 2.n
- 3: Verteiler: 3a Bereichsverteiler; 3b Flächenverteiler
- 4: Eingangsport des Endgerätes
- 5: Ausgangsport des Endgerätes
- 6: Endgerätekette, 6a zweite Endgerätekette
- 7: Nebenschlussverbindung
- 8: Nebenschlussverbindungsport in Endgerät
- 9: ausgeschaltetes Endgerät
- 10: Verteilerverbindung
- 11: Verbindungsport

## Patentansprüche

1. Übertragungssystem zum Übertragen von Kommunikationsdaten von wenigstens einer Datenquelle (1) an mehrere Endgeräte (2.1, 2.2, ..., 2.n) in einem Passagierflugzeug über zwei Verteiler (3b), die jeweils mit der Datenquelle (1) verbunden sind,
wobei die Endgeräte über jeweils einen ersten bidirektionalen Port (4) und einen zweiten bidirektionalen Port (5) zu zwei Endgeräteketten (6) hintereinander geschaltet sind,
das erste (2.1) und das letzte (2.n) Endgerät in jeder Endgerätekette (6) mit einer Nebenschlussverbindung (7) direkt miteinander verbunden sind, so dass die Kommunikationsdaten zwischen dem ersten Endgerät (2.1) und dem letzten Endgerät (2.n) in der Endgerätekette (6) von Endgerät zu Endgerät in der Kette übertragen werden, wenn alle Endgeräte miteinander verbunden sind, und,
wenn die Verbindung zwischen den Endgeräten in der Endgerätekette (6) durch eine Unterbrechung (9) unterbrochen ist, die Kommunikationsdaten von dem ersten Endgerät (2.1) in der Endgerätekette bis zu der Unterbrechung (9) und von dem letzten Endgerät (2.n) in der Endgerätekette bis zu der Unterbrechung (9) übertragen werden,
**dadurch gekennzeichnet, dass**
die Verteiler (3b) der Endgeräteketten (6) jeweils einen Eingangsport (4), über den der betreffende Verteiler (3b) mit der Datenquelle (1) verbunden ist, zwei Ausgangsports (5), von denen jeder mit dem ersten bidirektionalen Port (4) von einem der Endgeräte (2.1, 2.2, ..., 2.n) der entsprechenden Endgerätekette (6) verbunden ist, und einen bidirektionalen Verbindungsport (11) aufweisen, über den Daten ausgegeben und eingelesen werden können, wobei die Verteiler (3b) über eine Verteilerverbindung (10) miteinander verbunden sind, die an die bidirektionalen Verbindungsports (11) angeschlossen ist, so dass bei Ausfall des Verteilers (3b) von einer der Endgeräteketten (6) die entsprechende Kette (6) über den benachbarten Verteiler (3b) mit Daten versorgt wird, wobei die Daten durch den benachbarten Verteiler (3b) über dessen bidirektionalen Verbindungsport (11) ausgegeben werden und nach Empfang an dem bidirektionalen Verbindungsport (11) des ausgefallenen Verteilers (3b) direkt von diesem Verbindungsport (11) an die Ausgangsports (5) des ausgefallenen Verteilers (3b) weitergeleitet werden.

2. Übertragungssystem nach Anspruch 1, bei dem jedes Endgerät (2.1) und/oder jeder Verteiler (3b) einen Bypass-Schalter umfasst, durch den bei Ausfall des Endgerätes der erste bidirektionale Port (4) mit dem zweiten bidirektionalen Port (5) verbunden wird.

## Claims

1. Transmission system for transmitting communication data from at least one data source (1) to multiple terminals (2.1, 2.2, ..., 2.n) in a passenger aircraft via two distributors (3b) that are each connected to the data source (1),
wherein the terminals are connected in series with one another by means of in each case a first bidirectional port (4) and a second bidirectional port (5) to produce two terminal chains (6),
the first (2.1) and the last (2.n) terminal in each terminal chain (6) are connected directly to one another using a shunt connection (7), so that the communication data are transmitted between the first terminal (2.1) and the last terminal (2.n) in the terminal chain (6) from terminal to terminal in the chain if all the terminals are connected to one another, and,
if the connection between the terminals in the terminal chain (6) is interrupted by an interruption (9), the communication data are transmitted from the first terminal (2.1) in the terminal chain up to the interruption (9) and from the last terminal (2.n) in the terminal chain up to the interruption (9),
**characterized in that**
the distributors (3b) of the terminal chains (6) each have an input port (4), by means of which the respective distributor (3b) is connected to the data source (1), two output ports (5), each of which is connected to the first bidirectional port (4) of one of the terminals (2.1, 2.2, ..., 2.n) of the respective terminal chain (6), and a bidirectional connecting port (11), by means of which data can be output and read in, wherein the distributors (3b) are connected to one another by means of a distributor connection (10) connected to the bidirectional connecting ports (11), so that, in the event of the distributor (3b) of one of the terminal chains (6) failing, the respective chain (6) is supplied with data via the adjacent distributor (3b), wherein the data are output by the adjacent distributor (3b) by means of the bidirectional connecting port (11) thereof and, following reception at the bidirectional connecting port (11) of the failed distributor (3b), are forwarded directly from this connecting port (11) to the output ports (5) of the failed distributor (3b).

2. Transmission system according to claim 1, wherein each terminal (2.1) and/or each distributor (3b) comprises a bypass switch that, in the event of failure of the terminal, connects the first bidirectional port (4) to the second bidirectional port (5).

## Revendications

1. Système de transmission servant à transmettre des données de communication d'au moins une source de données (1) vers plusieurs terminaux (2.1, 2.2,.... , 2.n) dans un avion de passagers, par l'intermédiaire de deux distributeurs (3b), qui sont respectivement reliés à la source de données (1),
dans lequel les terminaux sont connectés en série de manière à former deux chaînes de terminaux (6), respectivement par l'intermédiaire d'un premier port bidirectionnel (4) et d'un second port bidirectionnel (5),
les premier (2.1) et dernier (2.n) terminaux sont directement interconnectés dans chaque chaîne de terminaux (6) par une liaison de dérivation (7), de manière à ce que les données de communication entre le premier terminal (2.1) et le dernier terminal (2.n) de la chaîne de terminaux (6) soient transmises d'un terminal à un autre de la chaîne, lorsque tous les terminaux sont reliés les uns aux autres, et,
lorsque la liaison entre les terminaux de la chaîne de terminaux (6) est interrompue par une interruption (9), les données de communication sont transmises par le premier terminal (2.1) de la chaîne de terminaux jusqu'à l'interruption (9) et par le dernier terminal (2.n) de la chaîne de terminaux jusqu'à l'interruption (9),
**caractérisé en ce que** les distributeurs (3b) des chaînes de terminaux (6) comportent chacun un port d'entrée (4) par l'intermédiaire duquel le distributeur respectif (3b) est relié à la source de données (1), deux ports de sortie (5), dont chacun est relié au premier port bidirectionnel (4) de l'un des terminaux (2.1, 2.2, ...., 2.n) de la chaîne de terminaux (6) correspondante, et un port de connexion bidirectionnel (11) par l'intermédiaire duquel des données peuvent être fournies en sortie et lues en entrée, dans lequel les distributeurs (3b) sont interconnectés par l'intermédiaire d'une liaison de distributeurs (10) qui est connectée aux ports de connexion bidirectionnels (11), de manière à ce qu'en cas de défaut du distributeur (3b), l'une des chaînes de terminaux (6) alimente la chaîne correspondante (6) en données par l'intermédiaire du distributeur adjacent (3b), dans lequel les données sont fournies en sortie par le distributeur adjacent (3b) par l'intermédiaire de son port de connexion bidirectionnel (11) et, après leur réception au niveau du port de connexion bidirectionnel (11) du distributeur défectueux (3b), sont directement retransmises depuis ce port de connexion (11) aux ports de sortie (5) du distributeur défectueux (3b).

2. Système de transmission selon la revendication 1, dans lequel chaque terminal (2.1) et/ou chaque distributeur (3b) comprend un commutateur de dérivation par l'intermédiaire duquel le premier port bidirectionnel (4) est relié au second port bidirectionnel (5) en cas de défaut du terminal.
